# EUROPEAN PATENT SPECIFICATION

(11) **EP 2 396 251 B1**
(45) Date of publication and mention of the grant of the patent: **07.11.2012**
(21) Application number: 10707444.5
(22) Date of filing: 12.02.2010
(51) Int. Cl.: B65D 85/804, A47J 31/36

(54) **PRE-PACKAGED GROUND COFFEE PORTION AND ESPRESSO COFFEE MACHINE USING THE SAME**
VORVERPACKTE KAFFEEPULVERPORTION UND ESPRESSOAUTOMAT DAZU
PORTION PRÉ-EMBALLÉE DE CAFÉ EN POUDRE ET MACHINE À CAFÉ EXPRESS UTILISANT CELLE-CI

(30) Priority: 16.02.2009 IT GE20090008
(43) Date of publication of application: 21.12.2011
(60) Divisional application: 12005695.7
(73) Proprietor: ESPRESSOCAP S.P.A., 20010 Bareggio (MI) (IT)
(72) Inventor: BARDAZZI, Bruno, I-50037 S. Piero a Sieve (IT); DORIA, Alessandro, I-20147 Milano (IT)
(74) Representative: Cacciamani, Clizia
(86) International application number: PCT/EP2010/000870
(87) International publication number: WO 2010/091872

(56) References cited:
- EP-A- 0 524 464
- EP-A- 0 631 948
- WO-A-00/51478
- CH-A- 434 609
- CH-A- 527 592
- DE-A1- 3 504 441

## Description

The present invention relates to a pre-packaged ground coffee portion usually termed capsule or pod, and it further relates to an espresso coffee machine suitably designed to use such pre-packaged portion.

The so-called coffee capsules or pods have been routinely used for a very long time, that is pre-packaged portions which can be used with ad-hoc machines as well as with common espresso coffee machines or even with "moka" pots in other cases.

This type of solution appears to be greatly appreciated by the users, who consider it as positive both from a hygienic point of view and for its easy preparation and steady performance. In particular, this type of pre-packaged portion machines is widely used in communities as offices, shops and the like, when the number of users is not sufficiently high to account for the use of complex automatic machines.

There are a large number of construction alternatives to produce such portions, from the point of view of both the adopted forms and the materials.

The first generation of prepackaged portions was made of paper or the like. These devices are generally conceived as filtering pods, which normally have very poor structural performances. Some of these prepackaged portions are described in the documents CH434609, CH527592, WO0051478, DE3504441 and EP0524464. Particularly, most of these devices are useful for preparing the so called "regular coffee", but they are not effective at relatively high pressure used to obtain espresso coffee.

Currently, most market operators have directed their attention to the production of pre-packaged portions completely made of a plastic material or a metallic material, either alone or in combination with a plastic material. Both choices are very practical both from a material processing point of view and for their effective performance with the devices intended to produce the coffee brew. However, there are remarkable environmental problems in handling the exhausted products. Indeed, the materials are difficult to be recycled in both cases, and in any case the recycling costs are extremely high.

Therefore, an aim of the present invention is to provide a pre-packaged ground coffee portion which is produced in such a way as to give a product provided with an increased environmental compatibility and in any case able to fully accomplish its function, allowing to yield high-quality coffee brews in an extremely simple manner.

Of course, preferably such a pre-packaged portion will require an espresso coffee machine projected to take the best advantage of its features and simple to be used and produced; thus, another aim of the present invention is such a machine.

Therefore, an object of the present invention is a pre-packaged ground coffee portion; said portion comprises a container body completely made of paper, paperboard or similar cellulosic materials, provided at the bottom wall thereof with a plurality of holes which are permeable to water while being substantially non-permeable to ground coffee, said container body having a filter material layer as a closing surface which is also derived from cellulose and permeable to water while being substantially non-permeable to ground coffee.

Particularly, said cellulosic material is coated by films or layers of waxes, paraffins or the like which are compatible from a food point of view and suitable to allow different components of paper and/or cellulosic material to be coupled. Preferably, the layer of material of the closing surface is formed in a similar manner to the bottom wall.

Advantageously, said container body has a substantially circular cross-section and it is provided with an outwardly protruding axial flange at the end facing the bottom wall. Moreover, an outwardly protruding radial flange exists at the end facing the closing surface.

Particularly, the container body is tapered towards the bottom wall. Said bottom wall can have said holes disposed according to concentric annular arrangements.

As already mentioned above, a pre-packaged portion with these features requires an espresso coffee machine which can maximize its utilization.

Patent EP1635680B1, in the name of the same Applicant, discloses an espresso coffee machine comprising a water tank, a pump for feeding said water to a boiler, a hot-water supply assembly, and fifter-holder means to accommodate a ground coffee portion which is preferably pre-packaged; said supply assembly and said filter-holder means are sealingly coupled to each other, and the path of the coupling movement lies on a plane which is substantially perpendicular to the intermediate coupling plane of said supply assembly and said filter-holder means, the surfaces of said supply assembly and said filter-holder means contacting each other only upon coupling therebetween; said filter-holder means is hinged at one end thereof to the body of said coffee machine near said supply assembly.

Then, such a machine has been developed into the machine as described in EP1937117A1, wherein said machine further includes an ejection unit arranged near the periphery of said supply assembly and protruding perpendicular to the intermediate coupling plane of said supply assembly and said filter-holder means, said ejection unit being provided at the free end thereof with means intended to co-act with the trail edge of said pre-packaged portion outwardly protruding from said filter-holder means, such as to result in the ejection thereof upon the removal of the same filter-holder means from said supply assembly.

However, this type of solution is effective when the pre-packaged portion is made of a rigid material which can easily react to the stress imparted by the ejection unit. In the case of the pre-packaged portion according to the present invention, the need for further developing the machine is clear since the consistency of the material forming such a capsule is much lower than that of the plastic material, and it strongly absorbs the extracting water; therefore, its consistency tends to be further reduced, to such an extent that an ejection unit of the type as described in the above-mentioned document cannot be actually used.

Therefore, it is described an espresso coffee machine comprising a water tank, a pump for feeding said water to a boiler, a hot-water supply assembly, and filter-holder means in which a pre-packaged ground coffee portion can be accommodated; said supply assembly and said filter-holder means are sealingly coupled to each other and the path of the coupling movement lies on a plane which is substantially perpendicular to the intermediate coupling plane of said supply assembly and said filter-holder means, the surfaces of said supply assembly and said filter-holder means contacting each other only upon coupling therebetween; said filter-holder means is hinged at one end thereof to the body of said coffee machine near said supply assembly, an ejection unit being provided for said pre-packaged portion; said ejection unit comprises a member arranged in contact with the trail edge of said portion, and particularly with the radial flange thereof, and pivotally connected to said filter-holder means, temporary coupling means being provided between said member and the wall of the body of said machine near said supply assembly, said temporary coupling means being provided with disengagement means.

Said temporary coupling means may comprise at least a pair of magnets, one magnet being arranged on said pivoting member and the other magnet being arranged on said body of the machine near said supply assembly. Preferably, said pivoting member is a bracket whose both ends are pivotally connected to said filter-holder means, and the cove included between said two ends contacts a large portion of the radial flange protruding from said pre-packaged portion.

Said filter-holder means may comprise a cavity intended to accommodate the pre-packaged portion, said cavity being provided at the bottom wall thereof with an annular groove formed near the side walls thereof, and with a plurality of concentric annular channels; each of said channels communicates by means of a respective duct with a brew collecting chamber communicating with the dispensing conduit.

Further advantages and features of the present invention will be apparent from the following detailed description of an embodiment thereof, which is provided by way of example, and not by way of limitation, with reference to the accompanying drawings, wherein:
Figure 1A is a side elevation view of an embodiment of the pre-packaged ground coffee portion according to the invention;
Figure 1B is a partial perspective view of the pre-packaged portion of Figure 1A;
Figure 2 is a sectional view of an espresso coffee machine in a brew extracting position;
Figure 3 is a sectional view of the machine of Figure 1 in the first step of ejecting the pre-packaged portion; and
Figure 4 is a perspective view of the machine of Figure 1 when the ejection of the capsule is completed.

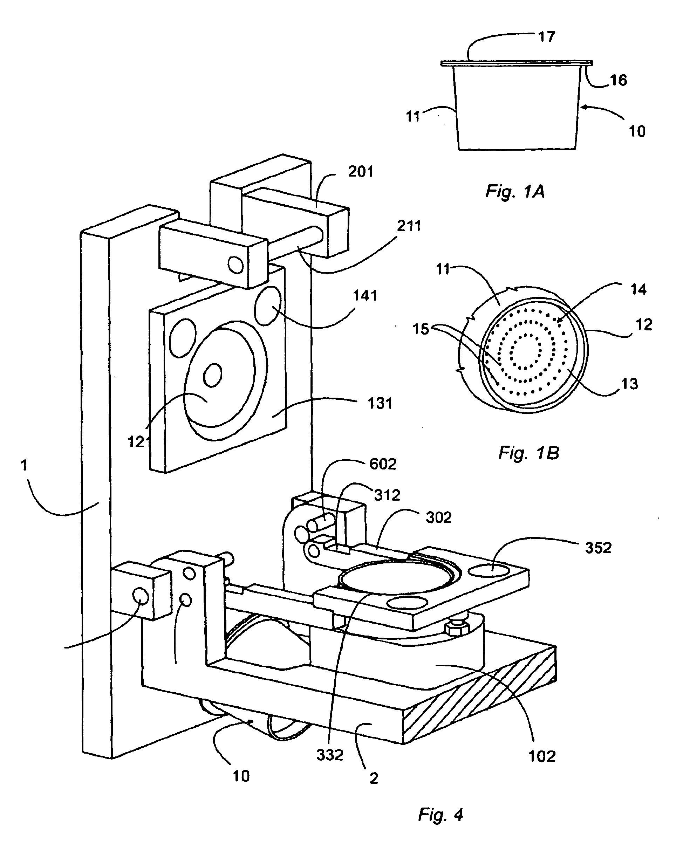

Figure 1 illustrates an embodiment of the pre-packaged portion according to the present invention; reference numeral 10 denotes the pre-packaged portion, in this case comprising a container body of food grade paperboard having the side wall 11 which is tapered from the upper end where there is formed a radial flange 16 to which a closing surface 17 is applied, towards the lower end.
Figure 1B illustrates the pre-packaged portion of Figure 1A according to a perspective in which it can be seen the bottom wall 13 at which an axial flange 12 is formed by the side wall 11. At the bottom wall 13 there are concentric annular paths 14 along which there are formed through-holes 15 whose cross-section is such as that brewing water can pass therethrough but not the ground coffee contained within the portion. The closing surface 17 is formed similarly to the bottom wall, being made of paper or the like and provided with a plurality of holes.

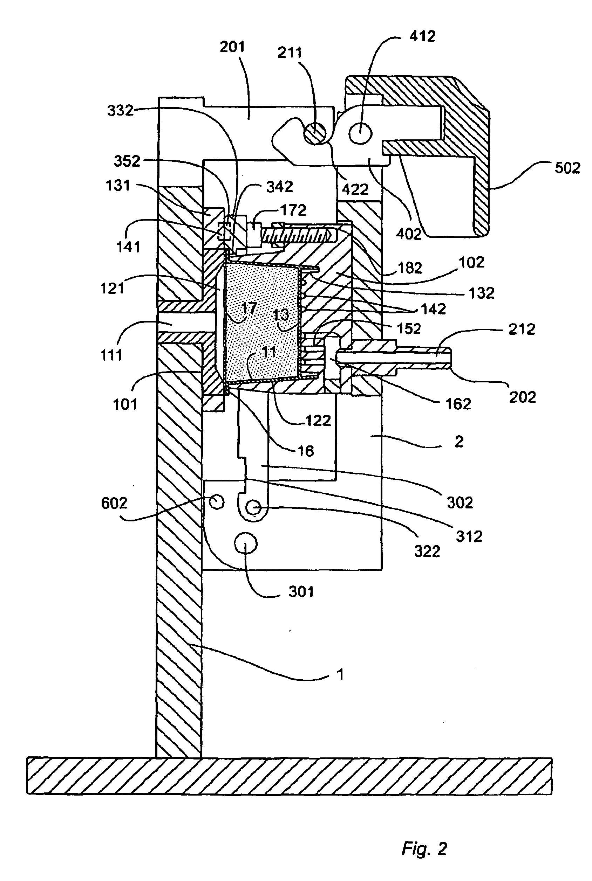

Figure 2 illustrates an espresso coffee machine . The body 1 of the espresso coffee machine - not entirely shown herein - is provided with pressurized hot-water supply means 101 comprising a dispensing spout 121 connected to a duct 111 which in turn is connected to the boiler of the machine (not shown in the Figure). The dispensing means of the machine is positioned in front of filter-holder means comprising a lid 2 on which there is arranged a filter-holder assembly 102 provided with a cavity 122 in which the pre-packaged portion 10 is accommodated, wherein like reference numerals as described above refer to like elements.

At the bottom wall of said cavity 122 there are formed concentric annular grooves 142 each leading to a duct 152 debouching into the manifold 162 which in turn is connected to the brew dispensing nozzle 202 whose channel 212 communicates with said manifold 162. Furthermore, the bracket 302 is attached to the lid 2 through pins 322 at the ends of each arm thereof, while the cove 332 of said bracket carries a magnet 342 which is coupled to another magnet 141 arranged on the frame 131 surrounding the pressurized hot-water supply means 101. Each arm of the bracket 302 has the notch 312 near the end pivoted on 322, while a tooth-shaped relief 352 intended to co-act with the radial flange 16 protruding from said pre-packaged portion 10 is formed in the cove 332, which relief is faced towards the filter-holder assembly 102. The correct position of the bracket 302 with respect to the filter-holder assembly 102 is achieved by the adjusting spacer bolt 172 accommodated in the threaded cavity 182.

The lid 2 is coupled to the machine through the overhanging arm 201 protruding from the wall 1 of the machine, which arm is provided with the pin 211 co-acting with the notch 422 cut in the swinging latch 402 pivoted to the lid on 412. The latch is operated through the handle 502.

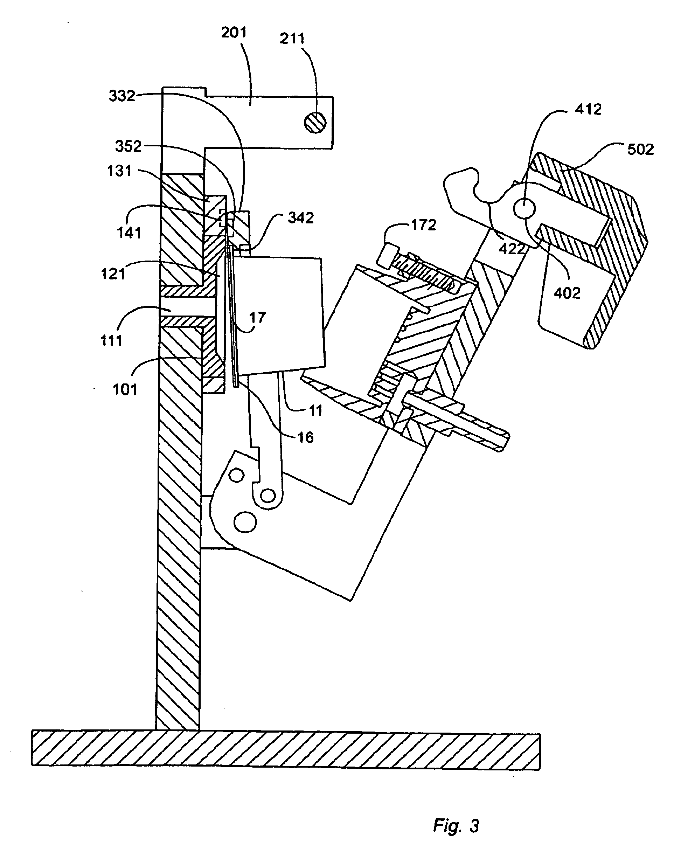

Figure 3 illustrates the machine of Figure 2 in the opened position of the lid 2; like reference numerals refer to like elements. In the figure it can be seen the extraction of the pre-packaged portion 10 from the cavity 122 of the filter-holder assembly 102.

Figure 4 shows the machine of the above figures when the ejection of the portion is completed. Like reference numerals refer to like elements; in the figure it can be seen that the configuration of the lid 2 is such that the ejected portion 10 can freely fall down without affecting the interaction between the machine and the lid.

The operation of the pre-packaged portion and the machine intended to use the same according to the present invention will become apparent from the following. When the portion is inserted into the cavity 122 of the filter-holder assembly 102 and the lid is closed through the cooperation of the latch 402 and the pivot 211 as shown in Figure 2, the ground coffee 20 contained within the portion 10 will begin to be brewed. Water permeates the closing surface 17 preferably formed similarly to the bottom wall 13, resulting in the extraction of the ground coffee. The brew is collected from the holes 15 arranged along the paths 14 formed at the bottom wall 13 into the channels 142 and from these, through the ducts 152, it is poured into the manifold 162 and supplied to be consumed through the nozzle 202.

While the brewing water is evenly poured into the capsule throughout its cross-section to embrace most of the ground coffee contained within the portion as soon as possible, when the brew is being supplied it is preferred to locally split the flows such as to promote those turbulence effects which produce the so-called "cream effect", which is extremely valuable from an organoleptic point of view and greatly appreciated by users, in the brewed extract.

When the extraction is concluded, the portion has now to be ejected from the filter-holder assembly to conveniently allow for the following extraction. Clearly, the portion could be manually removed from the filter-holder assembly, but this would bring a discomfort to the user; furthermore, because of the consistency of the material used to package the portion and due to its remarkable hygroscopicity, the exhausted portion will be highly deformed and particularly swelled, therefore its removal from the cavity where brewing occurred is not particularly easy and clean.

For this reason, in the machine there has been used the system as shown in Figures 2 and 3 of the accompanying drawings; namely, the portion 10 is provided with a protruding radial flange 16 which is in great extent abutted against the tooth-shaped relief 342 protruding inside the cove 332 of the bracket 302 as in the situation shown in Fig. 2. When the lid 2 is removed from the body of the machine by operating the latch 402 through the handle 502, the bracket remains coupled to the body of the machine due to the interaction between the magnets 342 of the bracket and the magnets 141 arranged on the frame 131 surrounding the hot-water supply means 101.

This situation causes the portion 10 to be removed from the cavity 122 of the filter-holder assembly 102; when the lid 2 is continued to be opened, the pins 602 protruding from the wall of the lid come into contact with the notches 312 formed in the arms of said bracket 302, and they contribute to release the same bracket 302 from its coupling to the wall 1 of the machine, resulting in the effective disengagement of the pairs of magnets 342, 141. It should be noted that it is firstly the swinging of the lid 2 relative to the pin 301 to promote the disengagement of the magnets by slipping the bracket 302 downwards with respect to the frame 131 as it can be noted in Fig. 3.

As shown in Fig. 4, the portion can now freely fall down onto the bottom portion of the machine, wherein a removable container will be advantageously provided to collect the exhausted portions, which removable container is not shown in the figure but well known for its use in several commercially available machines.

The pre-packaged portion according to the present invention has remarkable advantages both from a construction point of view and from an environmental impact point of view. Indeed, the material as used is greatly easy to be processed and it shows a better compatibility than plastic materials due to its high biodegradabitity.

The machine described is appropriately designed and implemented to take the best advantage of the features of the portion according to the present invention as well as to make its use extremely simple.

## Claims

1. Pre-packaged ground coffee portion, said portion comprising a container body (10) completely made of paper, paperboard or similar cellulosic materials, comprising a side wall (11), a bottom wall (13) and a closing surface (17), provided at the bottom wall (13) thereof with a plurality of holes (15) which are permeable to water while being substantially non-permeable to ground coffee, said container body (10) having a filter material layer (17) as a closing surface which is also derived from cellulose and permeable to water while being substantially non-permeable to ground coffee, wherein said container body (10) has a substantially circular cross-section, **characterised in that** the said side wall (11) is provided with an outwardly protruding axial flange (12) at the end facing the bottom wall (13).

2. Pre-packaged ground coffee portion according to claim 1, wherein said body (10) is provided with an outwardly protruding radial flange (16) at the end facing the closing surface (17).

3. Pre-packaged ground coffee portion according to any one of the preceding claims 1 or 2, wherein the side wall (11) said container body (10) is tapered towards the bottom wall (13).

4. Pre-packaged ground coffee portion according to any one of the preceding claims 1 to 3, wherein said bottom wall (13) has said holes (15) arranged along concentric annular paths (14).

## Patentansprüche

1. Vorverpackte gemahlene Kaffee, dass sie einen Behälterkörper (10) vollständig aus Papier, Pappe oder ähnlichen Zellulosematerialien umfasst, der eine Seitenwand (11), eine untere Wand (13) und eine schließende Oberfläche (17) umfasst und er ist an der unteren Wand (13) davon mit einem versehen Vielzahl von Löchern (15), die für Wasser durchlässig sind, während sie im wesentlichen nicht-durchlässig für gemahlenen Kaffee versehen, wobei der Behälterkörper (10) mit einem Filter Materialschicht (17) als Schließfläche, welches ebenfalls aus Zellulose gewonnen wird und wasserdurchlässig, während im wesentlichen nicht-durchlässig für gemahlenen Kaffee ist, versehen ist, wobei der Behälterkörper (10) einen im wesentlichen kreisförmigen Querschnitt, die Seitenwand (11) mit einem nach außen vorstehenden Axialflansch (12) am Ende gegenüber der unteren Wand (13) versehen ist.

2. Vorverpackte Portion gemahlenen Kaffees nach Anspruch 1, wobei besagter Körper (10) mit einem nach außen abstehenden Radialflansch (16) am Ende zugewandten der Schließfläche (17),

3. Vorverpackte gemahlene Kaffee Portion nach einem der vorhergehenden Ansprüche 1 oder 2, wobei die Seitenwand (11) des Behälterkörpers (10)verjüngten in Richtung der unteren Wand (13).

4. Vorverpackte gemahlene Kaffee-Portion nach einem der vorhergehenden Ansprüche 1 bis 3, wobei besagte untere Wand (13) hat besagte konzentrischer ringförmiger Wege (14) entlang angeordnete Löcher (15).

## Revendications

1. Portion préemballée de café moulu, la dite portion comprenant un corps conteneur (10), complètement fait en papier, carton ou semblables matériaux cellulosiques, à son tour comprenant une paroi latérale (11), une paroi de fond (13), une surface de fermeture (17), pourvu à sa paroi de fond (13) d'une pluralité de trous (15) qui sont perméables à l'eau et substantiellement non perméables au café moulu, le dit corps conteneur ayant une couche (17) de matériel filtrant comme surface de fermeture qui est aussi dérivée de la cellulose et perméable à l'eau, étant au même temps substantiellement non perméable au café moulu, où le dit corps conteneur (10) a une section transversale circulaire, **caractérisée en ce que** la dite paroi latérale (11) est pourvue avec un bride axiale (12) saillant au dehors, à l'extrémité orientée vers la paroi de fond (13).

2. Portion préemballée de café moulu selon la revendication 1, où le dit corps (10) est pourvu avec une bride radiale (16) saillant au dehors, à l'extrémité orientée vers la surface de fermeture (17).

3. Portion préemballée de café moulu selon 'une quelconque des revendications précédentes 1 ou 2, où la paroi latérale (11) du dit corps conteneur (10) est fuselée vers la paroi de fond (13).

4. Portion préemballée de café moulu selon 'une quelconque des revendications précédentes 1 à 3, où la dite paroi de fond (13) a les dits trous (15) arrangés le long des parcours annulaires concentriques.
